(19) Europäisches Patentamt
European Patent Office
Office européen des brevets

(11) Publication number: 0 174 821
A2

(12) # EUROPEAN PATENT APPLICATION

(21) Application number: 85306381.6

(22) Date of filing: 09.09.85

(51) Int. Cl.⁴: A 23 K 1/16
A 23 K 3/03, A 61 K 7/46
C 11 B 9/00

(30) Priority: 13.09.84 GB 8423153

(43) Date of publication of application: 19.03.86 Bulletin 86/12

(84) Designated Contracting States: AT BE CH DE FR GB IT LI LU NL SE

(71) Applicant: A.B.M. CHEMICALS LIMITED
Unity Mills Poleacre Lane
Woodley Stockport Cheshire(GB)

(72) Inventor: Baines, David Allan
1 Canterbury Avenue
Ely Cambridgeshire(GB)

(72) Inventor: Davies, Ian William
115 Coldham's Lane
Cambridge(GB)

(72) Inventor: Hatton, Roy
16 Coppice Close
Woodley Cheshire(GB)

(74) Representative: Holdcroft, James Gerald, Dr. et al,
Graham Watt & Co. Riverhead
Sevenoaks Kent TN13 2BN(GB)

(54) **Methods of treating vegetable foods for animals and fragrance compositions for use therein.**

(57) Silage etc. is treated to improve its acceptability to cattle or sheep by spraying with a fragrance composition exhibiting green notes. The composition comprises, for example *n*-hexanal, *cis*-3-hexen-1-ol, 1-octen-3-ol and β-ionone.

EP 0 174 821 A2

Croydon Printing Company Ltd.

METHODS OF TREATING VEGETABLE FOODS FOR ANIMALS AND FRAGRANCE COMPOSITIONS FOR USE THEREIN

This invention is concerned with improvements in or relating to the treatment of vegetable foods for animals.

Vegetable foods for animals e.g. cattle or sheep include for example grass, hay, straw and silage. The acceptability of these foods *per se* to the animal is somewhat variable, even when the nutritional value of the food is maintained. For example ammonia-treated straw may be quite unpalatable, and the acceptability of perfectly nutritious silage has been found to vary considerably.

Typically in the winter period dairy cattle are fed a mixture of compounded feeds and silage, and the higher the compounded feed content the higher the milk yield. Thus, the silage content can be used to control the milk yield, but this has at times proved unreliable in view of the relative unpalatability and consequential rejection of at least some of the silage by the animal.

In the case of sheep, especially lambs, it is found that often silage is even more unpalatable than it is to cattle.

Again with ewes, there can be wide variations in the acceptability of silage as between different animals;

e.g. in some cases by a factor as high as 7; and this can even be fatal for some animals, especially pregnant ewes.

It is an object of the present invention to improve the acceptability to an animal of vegetable foods particularly but not exclusively foods based on Glumiflorae e.g. those based on Gramineae (Poaceae), the grasses, such as grass, hay, straw and grass silage.

We have now found that treatment of vegetable food for animals with a fragrance exhibiting green notes provides a synergistic, strong, consistent and lingering effect in improving the acceptability of the food.

Fragrances exhibiting green notes are, for example, known in perfumery: see for example A.F. Morris "Perfumer and Flavorist" 1981 Volume 6 No. 1 page 1 et seq.

Also, it will be realized that grasses themselves contain compounds exhibiting green notes.

The invention provides a method of treating a vegetable food (based for example on Glumiflorae or Gramineae e.g. on grass, hay or straw) for animals to improve its acceptability to the animal, characterised by treating the food with a fragrance exhibiting green notes.

It is believed that the green aroma provided by

the fragrance is the most important single factor in obtaining the effect, but the taste imparted by the fragrance may also be significant.

Green notes are exhibited by a range of aliphatic compounds concentrated in the range 5-9 carbon atoms but we prefer those in the range 6-8 carbon atoms. There are also aromatic and heterocyclic compounds exhibiting green notes.

Examples of aliphatic compounds exhibiting green notes include saturated alcohols such as _n_-hexanol, _n_-heptanol, _n_-octanol: unsaturated alcohols such as _cis_-3-hexen-1-ol; _trans_-2-hexen-1-ol; 1-octen-3-ol; _cis_-6-nonen-1-ol; _trans_-2,_trans_-4-hexadien-1-ol; and _trans_-2,_cis_-6-nonadien-1-ol: saturated aldehydes such as _n_-hexanal and 3,5,5-trimethyl hexanal: unsaturated aldehydes such as _trans_-2,_trans_-4-hexadienal; _trans_-2-heptenal; _cis_-4-heptenal; _cis_-6-octenal; _trans_-2-nonenal; _trans_-2-_cis_-6-nonadienal: unsaturated esters such as methyl heptine carbonate ($CH_3(CH_2)_4C\equiv C-COOCH_3$); methyl octine carbonate ($CH_3(CH_2)_5C\equiv C-COOCH_3$); methyl 2-nonenoate; the formate, acetate, salicylate and methyl carbonate esters of _cis_-3-hexen-1-ol; _trans_-2-hexenyl acetate. Other aliphatic compounds exhibiting green notes include 6-methylhept-5-en-2-one and _cis_-3-hexenyl ethyl acetal of acetaldehyde.

Examples of aromatic compounds exhibiting green notes include phenylacetaldehyde; hydratropic aldehyde; 3-phenyl propionic aldehyde; *p*-methylphenylacetaldehyde; *p*-ethylphenylacetaldehyde; *p*-methylhydratropic aldehyde; *p*-isopropylphenylacetaldehyde; phenylacetaldehyde dimethylacetal; benzyl *n*-propyl carbinol; styrallyl acetate, which has the formula:

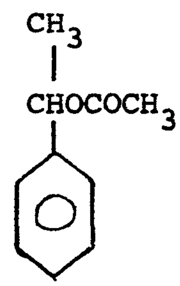

Other examples of substances exhibiting green notes are listed in the Morris paper, the entire disclosure of which is incorporated herein by reference. Still further examples are the heterocyclic compounds 2-pentylfuran, and 2-butylfuran.

A green note fragrance concentrate is usefully provided in a form suitable for dispersion in water preparatory to use in a method according to the invention, e.g. by spraying.

As well as being sprayed onto silage, hay, straw and the like, the composition could even be sprayed onto growing grass to improve its palatability where for some reason the animals were reluctant to graze.

Preferably the fragrance comprises at least one straight chain aliphatic compound having six carbon atoms and exhibiting green notes e.g. n-hexanal; cis-3-hexen-1-ol; trans-2-hexen-1-ol; or n-hexanol; and it may also comprise 1-octen-3-ol.

1-octen-3-ol as well as exhibiting green notes is mushroomy.

The invention also provides a fragrance composition characterised in that it comprises a straight chain aliphatic compound having six carbon atoms and exhibiting green notes; and 1-octen-3-ol.

The invention also provides a fragrance composition characterised in that it comprises n-hexanal and cis-3-hexen-1-ol.

The composition may also comprise 2-pentyl furan or 2-butyl furan; and β-ionone.

While 2-pentylfuran and 2-butylfuran exhibit green notes, this is not strictly true of β-ionone. β-ionone is woody with a fruity/raspberry undertone, and the furans are straw-like.

Other possible fragrant ingredients include any of furfural, n-tetradecanol, iso-amyl acetate, n-butanol, d-limonene, n-pentanol, isobutyl acetate, iso-amyl alcohol, γ-nonalactone, iso-amyl-iso-valerate, citral, anethole, vanillin, ethyl-iso-valerate, and 2-heptanone.

A preferred composition comprises n-hexanal, 1-octen-3-ol, β-ionone and cis-3-hexen-1-ol.

The preferred percentages by weight of these ingredients based on the total weight of the four ingredients are:

| | |
|---|---|
| n-hexanal | 1-40% |
| cis-3-hexen-1-ol | 15-40% |
| 1-octen-3-ol | 1-65% |
| β-ionone | 3-70% |

A composition embodying the invention also comprises a carrier in an amount of for example 85%-95% by weight carrier to 5%-15% by weight active ingredients.

Examples of carriers include soya oil, corn oil, and propane-1,2-diol. Propane-1,2-diol also serves as a stabiliser and humectant.

Other ingredients include an emulsifying agent and possibly an antioxidant, antifungal compound, and a sweetener.

Examples of emulsifying agents include polyoxyethylene(20)sorbitan mono-oleate (Tween 80) or sorbitan monolaurate (Span 80).

Examples of antioxidants include 1-ascorbic acid, and various derivatives thereof, various tocopherols, propyl, octyl or dodecyl gallate, butylated hydroxyanisole (BHA), butylated hydroxytoluene (BHT), and ethoxyquine.

Examples of antifungal compounds include sorbic acid, sodium, potassium or calcium sorbate; formic acid, ammonium, sodium or calcium formate; propionic acid, ammonium, sodium, calcium or potassium propionate.

Examples of sweeteners include saccharin, thaumatin, acesulfame K and aspartame.

The concentrate in liquid form is for example diluted 10-50 fold by weight with water before spraying onto e.g. silage.

Alternatively the concentrate may be supplied in spray dried form which can then be dispersed in water prior to use; as support carriers for the spray dried product there may be used one of the modified starches; preferred support carriers are maltodextrin and modified potato starch (Encapsol).

Sufficient is sprayed on to cover the surface of the silage, and typically 50 grams of active ingredients are used per tonne of silage.

The invention also provides a vegetable food, e.g. silage for animals, when treated by a method according to the invention; and a method of feeding animals e.g. cattle or sheep using such a food.

## Example I

### Fragrance Concentrate

| | Parts by weight |
|---|---|
| *n*-hexanal | 13.2 |
| furfural | 13.2 |
| 2-pentyl furan | 15.8 |
| 1-octen-3-ol | 50.0 |
| β-ionone | 2.6 |
| *n*-tetradecanol | 5.2 |
| | 100.0 |
| corn oil | 900.0 |
| emulsifier (60% Tween 80 and 40% Span 80) | 111.0 |

Hay was treated with this composition following ten fold by weight dilution with water.

## Example II

### Fragrance Concentrate

| | Parts by weight |
|---|---|
| n-hexanal | 11.6 |
| furfural | 11.6 |
| 2-pentyl furan | 14.0 |
| 1-octen-3-ol | 44.2 |
| cis-3-hexen-1-ol | 11.6 |
| β-ionone | 2.3 |
| n-tetradecanol | 4.7 |
| | 100.0 |
| soya oil | 900.0 |
| emulsifier (60% Tween 80 and 40% Span 80) | 111.0 |

Silage was treated with this composition following ten fold by weight dilution with water.

It should be noted here that while cis-3-hexen-1-ol is believed to be present in natural grass, it is thought not to be present in silage.

### Percentages by Weight of Four Ingredients

| | | |
|---|---|---|
| n-hexanal | : | 16.65 |
| cis-3-hexen-1-ol | : | 16.65 |
| 1-octen-3-ol | : | 63.4 |
| β-ionone | : | 3.3 |
| | | 100.0 |

## Example III

### Fragrance Concentrate

| | Parts by weight |
| --- | --- |
| *n*-hexanal | 26.0 |
| furfural | 26.0 |
| 2-pentyl furan | 33.0 |
| β-ionone | 5.0 |
| *n*-tetradecanol | 10.0 |
| | 100.0 |

## Example IV

As Example III with the addition of 900.0 parts by weight soya oil.

## Example V

### Fragrance Concentrate

| | Parts by weight |
|---|---|
| n-hexanal | 23.2 |
| furfural | 11.6 |
| 2-pentyl furan | 7.0 |
| 1-octen-3-ol | 20.0 |
| cis-3-hexen-1-ol | 31.3 |
| β-ionone | 6.9 |
| | 100.0 |
| soya oil | 900.0 |

### Percentages by Weight of Four Ingredients

| | |
|---|---|
| n-hexanal | 28.5 |
| cis-3-hexen-1-ol | 38.4 |
| 1-octen-3-ol | 24.6 |
| β-ionone | 8.5 |
| | 100.0 |

## Example VI

### Fragrance Concentrate

| | Parts by weight |
|---|---|
| *n*-hexanal | 31.0 |
| furfural | 12.0 |
| 2-pentyl furan | 5.0 |
| 1-octen-3-ol | 15.0 |
| *cis*-3-hexen-1-ol | 25.0 |
| β-ionone | 12.0 |
| | 100.0 |

### Percentages by Weight of Four Ingredients

| | |
|---|---|
| *n*-hexanal | 37.35 |
| *cis*-3-hexen-1-ol | 30.1 |
| 1-octen-3-ol | 18.1 |
| β-ionone | 14.45 |
| | 100.0 |

## Example VII

### Fragrance Concentrate

| | Parts by weight |
|---|---|
| Concentrate of Example VI | 5.00 |
| propane-1,2-diol | 94.99 |
| colorant comprising tartrazine (E102) and triarylmethane (E133) | 0.01 |
| | 100.00 |

Alternatively 15 parts by weight of the concentrate were used to 84.99 parts of propane-1,2-diol.

## Example VIII

### Fragrance Concentrate

| | Parts by Weight |
|---|---|
| n-hexanal | 0.27 |
| cis-3-hexen-1-ol | 3.3 |
| 1-octen-3-ol | 0.18 |
| β-ionone | 8.5 |
| other fragrant ingredients | 87.75 |
| | 100.00 |

the other fragrant ingredients were a mixture of iso-amyl acetate, n-butanol, d-limonene, n-pentanol, iso-butyl acetate, iso-amyl alcohol, γ- nonalactone, iso-amyl-iso-valerate, citral, anethole, vanillin, ethyl-iso-valerate, and 2-heptanone.

### Percentages by Weight of Four Ingredients

| | |
|---|---|
| n-hexanal | 2.2. |
| cis-3-hexen-1-ol | 26.9 |
| 1-octen-3-ol | 1.5 |
| β-ionone | 69.4 |
| | 100.0 |

## Example IX

### Fragrance Concentrate

| | Parts by weight |
|---|---|
| concentrate of Example VIII | 25.000 |
| propane-1,2-diol | 73.978 |
| saccharin | 0.500 |
| emulsifier (Tween 80) | 0.500 |
| colorant comprising tartrazine (E102) | 0.022 |
| | 100.000 |

The concentrate of this Example was diluted fifty fold by weight with water and sprayed onto straw which was then fed to a test group of cattle over a period extending from January to May in the same year. A control group of cattle were fed with untreated straw over the same period.

The test group appeared to find their flavoured straw more consistently palatable, particularly in the long term, than did the control group with their untreated straw.

Also, the daily liveweight gain of the test group over the whole period of the trial exceeded that for the control group.

The concentrate of the Example was also diluted and effectively used to flavour silage.

## Example X

### Fragrance Concentrate

| | Parts by Weight |
|---|---|
| n-hexanal | 0.19 |
| cis-3-hexen-1-ol | 5.7 |
| 1-octen-3-ol | 0.20 |
| β-ionone | 9.2 |
| other fragrant ingredients | 84.71 |
| | 100.00 |

the other fragrant ingredients were a mixture of iso-amyl acetate, n-butanol, n-pentanol, iso-butyl acetate, iso-amyl alcohol, γ-nonalactone, iso-amyl-iso-valerate, citral, anethole, vanillin, ethyl-iso-valerate and 2-heptanone.

### Percentages by Weight of Four Ingredients

| | |
|---|---|
| n-hexanal | 1.2 |
| cis-3-hexen-1-ol | 37.3 |
| 1-octen-3-ol | 1.3 |
| β-ionone | 60.2 |
| | 100.00 |

## Example XI

### Fragrance Concentrate

| | Parts by Weight |
|---|---|
| concentrate of Example X | 25.00 |
| propane-1,2-diol | 74.44 |
| thaumatin | 0.05 |
| colorant comprising tartrazine (E102) and triaryl methane (E133) | 0.01 |
| emulsifier (Tween 80) | 0.50 |
| | 100.00 |

The concentrate of this Example was diluted fifty fold by weight with water and sprayed onto silage, which was then fed to a test group of sheep over a period from mid January to the end of March. A control group of sheep was fed with untreated silage over the same period.

The test group appeared to find their flavoured silage more consistently palatable particularly in the long term than did the control group with their untreated silage. Also less variation in silage consumption as between individual sheep was observed with the test group than with the control group.

The average intake of silage per animal over the whole period for the test group was 44 grams per day above that for the control group.

There was a net average loss in liveweight for

both groups over the period in question but the average loss for the test group was only 6.3 grams per animal per day as compared with 26.3 grams per animal per day for the control group.

Also the concentrate of this Example was diluted and effectively used to flavour straw.

It will be noted that the compositions of Examples VIII-XI contain many more fragrant ingredients than those of Examples I-VII, and are therefore much less complex.

Ranges of Percentages by Weight of Four Ingredients

| | Examples II, V and VI | Examples VIII and X |
|---|---|---|
| n-hexanal | 15-40 | 1-3 |
| cis-3-hexen-1-ol | 15-40 | 25-38 |
| 1-octen-3-ol | 15-65 | 1-2 |
| β-ionone | 3-15 | 60-70 |

CLAIMS:

1. A method of treating a vegetable food (based for example on Glumiflorae or Gramineae, e.g. on grass, hay or straw) for animals to improve its acceptability to the animal, characterised by treating the food with a fragrance exhibiting green notes.

2. A method according to claim 1, wherein the fragrance comprises at least one straight chain aliphatic compound having 6 to 8 carbon atoms and exhibiting green notes, e.g. any of n-hexanal; cis-3-hexen-1-ol; trans-2-hexen-1-ol, and n-hexanol.

3. A method according to claim 2, wherein the fragrance comprises 1-octen-3-ol.

4. A method according to any one of claims 1, 2 and 3, wherein the food comprises silage.

5. A fragrance composition characterised in that it comprises a straight chain aliphatic compound having six carbon atoms and exhibiting green notes (e.g. any of n-hexanal, cis-3-hexen-1-ol, trans-2-hexen-1-ol and n-hexanol); and 1-octen-3-ol.

6. A composition according to claim 5, comprising n-hexanal, cis-3-hexen-1-ol and β-ionone.

7. A composition according to claim 6 comprising the following percentages by weight based on the total weight of the four ingredients:

| | |
|---|---|
| n-hexanal | 1-40% |
| cis-3-hexen-1-ol | 15-40% |
| 1-octen-3-ol | 1-65% |
| β-ionone | 3-70%. |

8. A fragrance composition characterised in that it comprises n-hexanal and cis-3-hexen-1-ol.

9. A composition according to any one of claims 5 to 8, also comprising any of 2-pentyl furan, 2-butyl furan, furfural, n-tetradecanol, iso-amyl acetate, n-butanol, d-limonene, n-pentanol, iso-butyl acetate, iso-amyl alcohol, γ-nonalactone, iso-amyl-iso valerate, citral, anethole, vanillin, ethyl iso-valerate, and 2-heptanone.

10. A method according to claim 1, using a composition according to any one of claims 5 to 9.

11. A method of feeding animals (e.g. cattle or sheep) using food treated by a method according to any of one of claims 1, 2, 3, 4 and 10.